# EUROPEAN PATENT SPECIFICATION

(11) **EP 0 968 099 B1**
(45) Date of publication and mention of the grant of the patent: **24.07.2002**
(21) Application number: 98910886.5
(22) Date of filing: 19.03.1998
(51) Int. Cl.: B60R 11/02

(54) **VEHICLE COMPONENTS INCORPORATING ACUSTIC RADIATOR PANEL-FORM LOUDSPEAKERS**
KOMPONENTE EINES PERSONENWAGEN MIT LAUTSPRECHER DIE ALS PANEELFÖRMIGE AKUSTISCHE ABSTRAHLELEMENTE GESTALTET SIND
PIECES DE VEHICULE EQUIPES DE HAUT-PARLEURS MUNIS D'ELEMENTS RADIANTS ACOUSTIQUES EN FORME DE PANNEAU

(30) Priority: 22.03.1997 GB 9705979
(43) Date of publication of application: 05.01.2000
(73) Proprietor: New Transducers Limited, London SW3 3QH (GB)
(72) Inventor: AZIMA, Henry, Cambridge CB2 2TT (GB); COLLOMS, Martin, London NW2 2DA (GB); ELLIS, Christian, Great Chishill Hertfordshire SG8 8SB (GB)
(74) Representative: Greene, Simon Kenneth
(86) International application number: GB9800835
(87) International publication number: WO9842536

(56) References cited:
- EP-A- 0 411 786
- WO-A-97/09858
- WO-A-97/09859
- WO-A-97/09861
- DE-A- 3 603 198
- DE-A- 4 328 720
- DE-A- 19 638 189
- GB-A- 2 281 836
- US-A- 4 362 907

## Description

### TECHNICAL FIELD

The invention relates to vehicle components incorporating acustic radiator panel-form loudspeakers.

### BACKGROUND ART

Embodiments of the present invention use acoustic radiator panel-form loudspeakers as known from WO-A-97 09842. Such loudspeakers have capability to sustain and propagate input vibrational energy by bending waves in operative area(s) extending transversely of thickness often but not necessarily to edges of the member(s); are configured with or without anisotropy of bending stiffness to have resonant mode vibration components distributed over said area(s) beneficially for acoustic coupling with ambient air; and have predetermined preferential locations or sites within said area for exciter means, particularly operationally active or moving part(s) thereof effective in relation to acoustic vibrational activity in said area(s) and signals, usually electrical, corresponding to acoustic content of such vibrational activity.

Such loudspeakers are also called distributed mode acoustic radiators.

This invention is concerned with vehicle components having acoustic devices in the form of resonant acoustic radiator loudspeakers for use in passenger vehicles such as automobiles, aircraft, boats, railway trains etc, and to vehicles incorporating such loudspeakers.

A vehicle component according to the preamble of claim 1 is known from WO-A- 97 09 842.

### DISCLOSURE OF INVENTION

The invention is a vehicle component according to claim 1.

The vehicle component may be integral with a passenger seat in the vehicle or with a door into the passenger compartment. The vehicle component may be integral with the interior of the passenger compartment, e.g. a wall, floor or roof. Thus the vehicle component may be integral with a roof lining in an automobile or the like. A plurality of such radiators may be arranged in the vehicle.

The vehicle component comprises a plastics or fibrous moulded component in or forming part of the passenger compartment.

The radiator may comprise a stiff lightweight panel having cellular core sandwiched between skin layers, and wherein one of the skins is integral with the moulded component. The said one skin may be thin in comparison to the average wall thickness of the component. The said one skin may be surrounded by a groove or slot in the component, the groove defining a resilient surround for the radiator, and the slot helping to define a region of distributed mode bending operation.

Employing the principle for the distributed mode loudspeaker described in our International application WO97/09842, it is possible to employ suitable existing structures, directly or by adaptation or modification, or by original design, to operate as effective loudspeakers.

Distributed mode operation indicates that a beneficial spread of modal resonances be encouraged in a structure intended to operate as an acoustic radiator. The principle teaches properties of structure, geometry and driving point(s) which promote good modal density for wide range sound reproduction. Some structures e.g. existing or prefabricated or similar panels may naturally have such a property in the frequency range of interest, for which a suitable mathematical and mechanical analysis will determine the optimum driving point(s) and exciter(s) and their characteristics for a useful acoustic output.

Obviously where existing or installed structures are appropriate there is potentially high convenience, utility and decorative value and additionally a cost benefit for additional operation/inclusion of a loudspeaker, whether for music or speech application for example hands-free mobile telephony to enhance safety. Such class of speaker provides weight saving and/or greater impact safety for the vehicle occupants.

Subject to structural and acoustic analysis including the effect of the potential air load, an existing interior door panel or parcel shelf or equivalent or roof lining may benefit from modification to its mountings or the addition of stiffening members, sections or panels, to result in a performance closer to the intended distributed mode form, in the intended range of operation.

Alternatively these panel units, compatible or otherwise with existing practice, may be structured and designed to possess distributed mode potential for vehicular and general interiors of buses, or dimensions small than rooms e.g. rail coaches, buses etc. according to the principles described in our International application WO97/09842.

For automotive use the distributed mode principle is particularly suited since the acoustic element may be robust, water and environmentally resistant and requires no grill cover or opening, or protection for its effective operation. In fact the acoustic part of the panel may be fully integrated such that no external witness of its presence is required this also for interior design where the visual presence of loudspeaker systems is to be avoided.

Where sound systems are incorporated in vehicles, the distributed mode principle allows them to be fully integrated in prefabricated units including related services such as rooflights and related control and display technology served by as little as one wiring harness for reduced assembly cost. In additional the integration of more advanced facilities in, for example, a vehicle roof lining, adds engineering value to this product.

While distributed mode speakers are capable of, and are generally designed to operate over, a wide frequency range, in particular uniquely to reach to the highest audible frequencies without the use of additional drive elements or crossover networks, some panel structures lend themselves to effective operation in the lower frequency range owing to their relatively low fundamental bending frequency. While employing built-in or otherwise distributed mode speaker elements for the usual middle and upper frequency range, the naturally low bending frequency(s) for the structural or modular panels in question may be utilised for sound reproduction which optimised in the low frequency range to work congruently with the upper range units. The result is a beneficial additional operation of such panel as dual purpose while the low frequency range may extend in to the range generally covered by box type units called sub woofers, characterised by operation in the range below 150Hz and which may extend down to audible 20 Hz limits or thereabouts, this lower limit still sensed by human perception and capable of enhancing the enjoyment of reproduced music signals of wide recorded bandwidth. Larger structural panels of heavier construction of resin bonded composites of combinations of these and similar material will have modal resonances extending to the low range and may be driven by a number of electromagnetic energisers including those designed specifically to suit distributed mode loudspeakers as described in our International applications WO97/09859, WO97/09861, WO97/09858, optimised by driving force and natural resonance to couple well to larger heavier panels.

The integration of sound systems with vehicle design, also with lighting units is an important aspect of modern practice. The distributed mode speaker principle is uniquely suited to these applications where unobtrusive even totally concealed sound systems may be designed. Full range types of loudspeakers, resonant panel or otherwise, may be augmented by resonating distributed mode panels which are designed to be effective in the low range. Low range sounds are essentially non directional which largely removes restraints on placement. Thus low range distributed mode panels may be positioned advantageously under seating in a protected area or incorporated in the under panelling of the seat.

Vehicle components which are suited to low frequency operation with electrodynamic exciters include parcel shelves, headlinings and door interior panels.

The structure of a headlining may be multi-layer, with a resinated fibre structural base overlaid by an acoustically porous thin foam and a fabric or other decorative covering. The headlining base may be perforated by one or more apertures in which small distributed mode speakers may be resiliently supported to provide one or more channels of sound reproduction conveniently above the passengers heads, the sound easily being transmitted through the porous layer. These separate distributed mode speakers are more suited to the middle and upper frequency range and the low range is then preferably reproduced by resonating the structure of the headlining with a suitable electrodynamic exciter. The particular virtue of a distributed mode speaker in this design is the lack of hot spot or proximity effect and which provides superior sound distribution for the vehicle passengers.

In manufacture, small distributed mode speakers may be moulded into place in a headlining or the like to simplify construction. To avoid the possibility of power overload, and the consequent need for repair, thermal limiters, e.g. self resetting positive temperature co-efficient resistors, may be incorporated in the wiring harness to protect the exciters.

When the vehicle component is proximate to the heads of the passengers, especially in the headliner or headrest applications, noise cancellation of good order of bandwidth and rejection ratio may be achieved as an additional benefit in conjunction with suitable signal processing systems, known per se.

Due to very wide dispersion characteristics of distributed mode loudspeaker and the diffuse nature of the sound, an even sound distribution is achieved in the vehicle cabin with good signal to noise ratio. Further enhancement of the 'tonal balance' and also 'dynamic road noise reduction' i.e. noise cancellation may be achieved by DSP (digital signal processing) methods due to the very uniform nature of the sound power distribution of distributed mode loudspeaker panels.

Due to the electrically compatible nature of distributed mode speaker panels using electro-dynamic exciters, existing electronics and amplification may be used.

Due to the current manufacturing procedures adopted by vehicle manufacturers, they prefer to purchase fully functional pre-tested sub-assemblies. The above applications lend themselves to such preferred methods of manufacturing and sub-contracting.

### BRIEF DESCRIPTION OF DRAWINGS

The invention is diagrammatically illustrated, by way of example, in the accompanying drawings, in which:-
Figure 1 is a plan view of a roof or headlining for an automobile, constructed in accordance with the present invention;
Figure 2 is a scrap cross-sectional side view of the headlining of Figure 1;
Figure 3 is a perspective view of the front portion of an automobile;
Figure 4 is a plan view corresponding to Figure 3, and
Figure 5 is a view of part of the interior of an automobile.

### BEST MODES FOR CARRYING OUT THE INVENTION

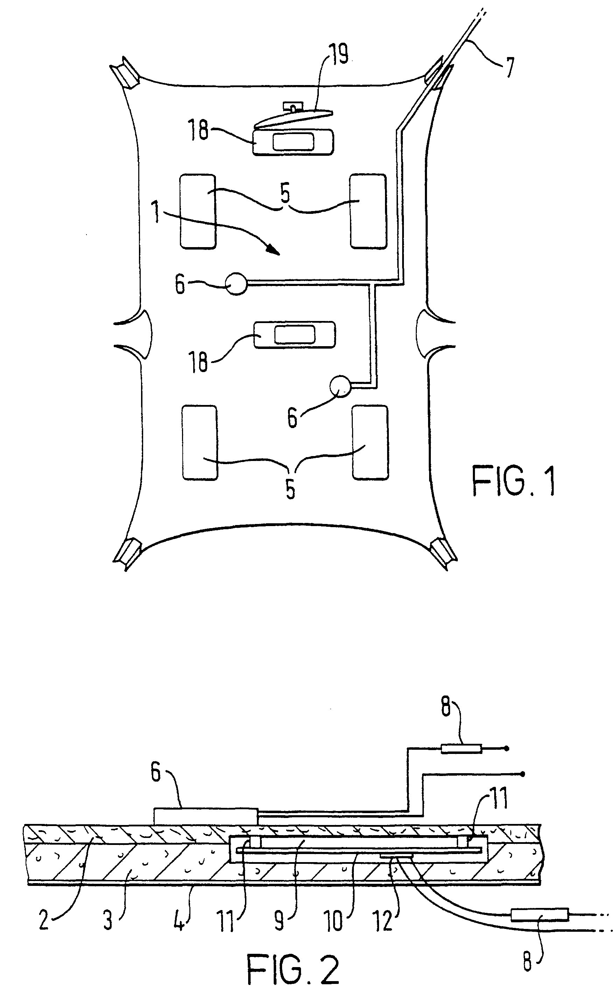

In Figures 1 and 2 there is shown a roof or headlining (1) for an automobile (not shown) which headlining comprises a main body (2) of resin impregnated fibrous material which is formed to shape by moulding and which is covered on its under surface with a resilient foam layer (3), e.g. of plastics or rubber, which in turn is covered by a decorative skin layer (4) of textiles fabric or the like.

As shown, four acoustic radiator panel-form loudspeakers (5) are provided inside the thickness of the headlining and are arranged in the headlining such that they are positioned generally above the heads of the occupants of the automobile. The four loudspeakers (5) are intended as mid/high frequency loudspeakers. In addition an opposed pair of vibration exciters (6) are mounted directly on the body of the headlining, to excite the headlining at low frequencies in the manner of a subwoofer operating as a distributed mode acoustic radiator. The vibration exciters may be of the kind described in International application Nos. WO97/09859, WO97/09861, WO97/09858 and are preferably electrodynamic inertial devices. A wiring harness (7) providing electrical power to the various loudspeakers and other components such as interior lights (18) is integral with the headlining. It might be desirable to provide current limiters (8) in the wiring (7) to the loudspeakers to protect the exciters against overload. A rear view mirror (19) is shown mounted on the headlining.

As shown in Figure 2, the mid/high frequency loudspeakers (5) are provided in cavities (9) formed in the thickness of the body (2) of the headlining and by locally reducing the thickness of the resilient foam layer (3) whereby the foam layer is acoustically transparent. Stiff lightweight generally rectangular panel monoliths (10), e.g. of fibre impregnated plastics forming resonant acoustic radiators are mounted in the respective cavities (9) on discrete resilient suspension elements (11), e.g. of a foamed elastomeric material which are mounted on the body and which are fixed to the panel (10) near to its edges. A vibration exciter (12) is mounted on the panel (10) to launch bending waves into the panel and is positioned on the panel. The exciters (12) may be electrodynamic and may be of the inertial variety.

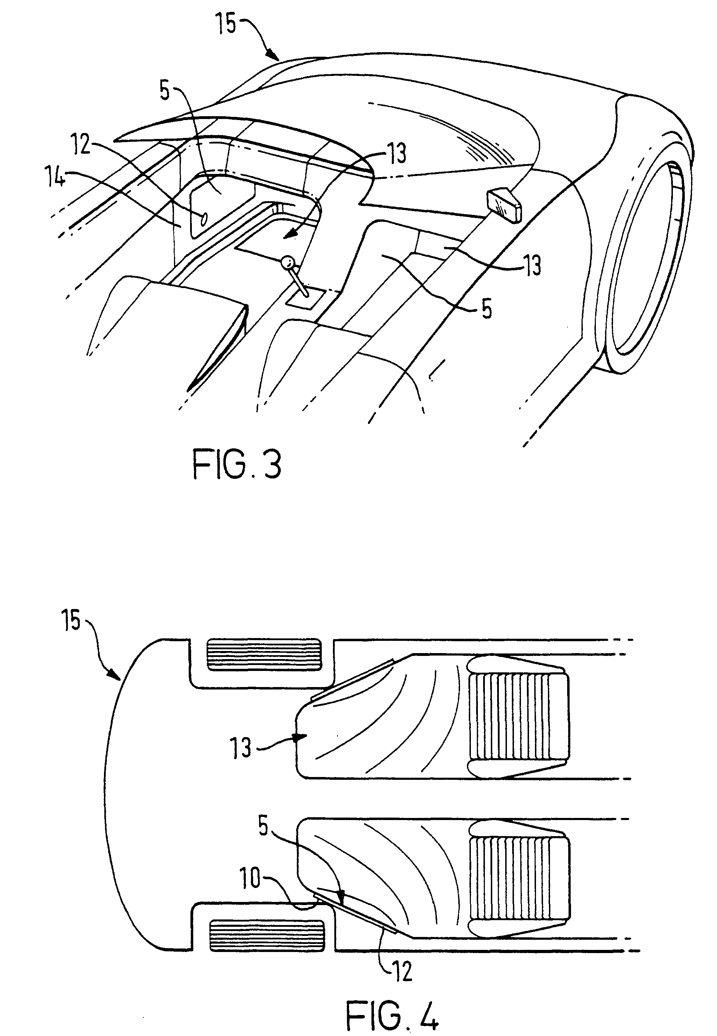

Figures 3 and 4 show an automobile (15) with roof and roof lining omitted in the interests of clarity, and illustrate that acoustic radiator panel loudspeakers (5) of the kind described above are also provided in the interior lining (14) of the passenger footwells (13) and may benefit from such positioning since the partly enclosed volumes of such footwells may act as horns or resonators to enhance the acoustic signal. The radiators may be low frequency, i.e. subwoofer, loudspeakers.

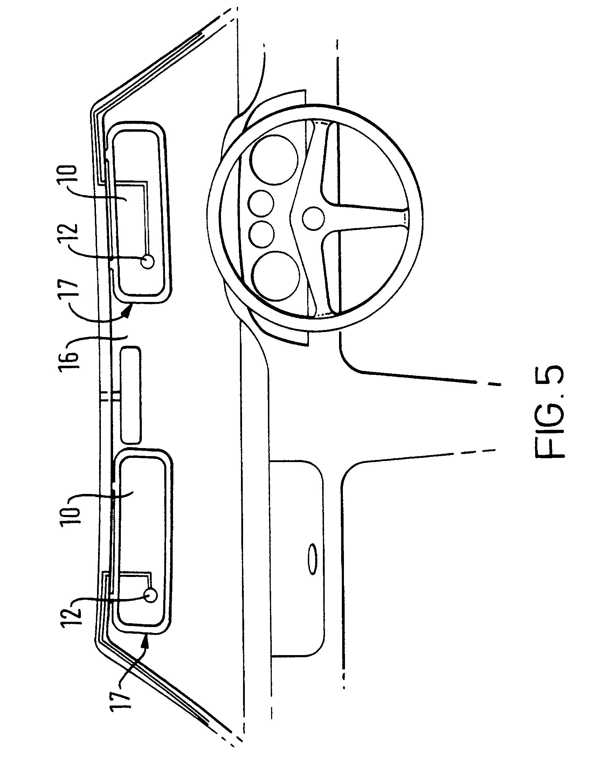

In Figure 5, an automobile (15) of the kind described above is additionally equipped with distributed mode acoustic radiator loudspeakers (5) integrated in sun visors (17) attached to the top of the automobile windshield (16). The sun visors (17) incorporate resonant panels (10) excited by vibration exciters (12) as described above. The panel form of a distributed mode acoustic radiator makes it particularly suitable for such a purpose. By careful balancing of sound levels, the visor sound source can be used to provide improved image steering and frontal localisation for front seated persons in the vehicle.

For rear passengers augmented localisation may be achieved by additional vehicle components working in addition to the main headlining/parcel shelf radiators: these may be incorporated in seat backs, headrests or restraints or door trim sections.

## Claims

1. A vehicle component in the form of a moulded lining member (1,14) for a passenger compartment, the lining member (1,14) comprising a first acoustic radiator panel-form loudspeaker (5) with a panel (10) having capability to sustain and propagate input vibrational energy by bending waves in at least one operative area extending transversely of thickness to have resonant mode vibration components distributed over said at least one area and having predetermined preferential locations or sites within said area for vibration exciters (12), and one or more vibration exciters (12) attached direct to the panel (10) at at least one of said locations or sites to vibrate the acoustic radiator,
**characterised in that** the moulded lining member (1,14) is formed with a cavity (9) in which the first acoustic radiator (5) is resiliently mounted to act as a mid/high frequency radiator and **in that** one or more vibration exciters (6) are mounted direct to the moulded lining member (1,14) to cause the moulded lining member (1,14) to resonate at low frequencies forming a low frequency radiator providing a bass acoustic output when resonating.

2. A vehicle component according to claim 1, **characterised in that** the moulded lining member is a sun visor.

3. A vehicle component according to claim 1 or claim 2, **characterised in that** the moulded lining member is an automobile footwell lining member (14).

4. A vehicle component according to any one of claims 1 to 3, **characterised in that** the moulded lining member is a shell for a passenger seat.

5. A vehicle component according to claim 4, **characterised in that** the shell comprises a head restraint and **in that** the acoustic radiators are located in the head restraint.

6. A vehicle component according to any one of claims 1 to 5, **characterised in that** the moulded lining member is a headlining (1).

7. A vehicle component according to any one of claims 1 to 6, **characterised in that** the moulded lining member (1,14) comprises a main body (2) of resin impregnated fibrous material covered by a resilient foam layer (3) and a decorative facing (4), the cavity (9) being formed in the thickness of the body (2) and the thickness of the resilient foam layer (3) being reduced whereby the foam layer is acoustically transparent.

8. A vehicle (15) having a passenger compartment comprising a vehicle component according to any one of claims 1 to 7.

9. A vehicle according to claim 8, **characterised by** a passenger compartment door having a door lining and in that a mid/high frequency and/or a low frequency radiator is attached to or integral with the door lining.

10. A vehicle according to claim 8 or claim 9, **characterised in that** the mid/high frequency radiators (5) are positioned above individual passenger seats in the vehicle.

11. A vehicle according to any one of claims 8 to 10, **characterised in that** the or each vibration exciter (5, 10) is electrodynamic.

## Patentansprüche

1. Fahrzeugkomponente in der Gestalt eines geformten Verkleidungselements (1, 14) für einen Fahrgastraum, wobei das Verkleidungselement (1, 14) einen ersten akustischen Abstrahler in Gestalt eines paneelförmigen Lautsprechers (5) mit einem Paneel (10) umfasst, das die Fähigkeit hat, zugeführte Schwingungsenergie durch Biegewellen in mindestens einem sich quer zur Dicke erstreckenden Wirkungsbereich zu erhalten und zu verbreiten, um über den mindestens einen Bereich verteilte Resonanzmodus-Schwingungskomponenten aufzuweisen, und das innerhalb dieses Bereichs vorbestimmte, bevorzugte Orte oder Positionen für Schwingungserreger (12) aufweist, sowie einen oder mehrere Schwingungserreger (12), die an mindestens einem der Orte oder einer der Positionen unmittelbar an dem Paneel (10) befestigt sind, um den akustischen Abstrahler in Schwingung zu versetzen, **dadurch gekennzeichnet, dass**
das geformte Verkleidungselement (1, 14) mit einem Hohlraum (9) ausgebildet ist, in dem der erste akustische Abstrahler (5) federnd elastisch befestigt ist, um als Mittel/Hochfrequenzabstrahler zu wirken, und dass einer oder mehrere Schwingungserreger (6) unmittelbar an dem geformten Verkleidungselement (1, 14) angebracht sind, um ein Schwingen des geformten Verkleidungselements (1, 14) mit niedrigen Frequenzen zu verursachen und einen Niedrigfrequenzabstrahler zu bilden, der beim Schwingen einen akustischen Bassausgang bereitstellt.

2. Fahrzeugkomponente nach Anspruch 1, **dadurch gekennzeichnet, dass** das geformte Verkleidungselement eine Sonnenblende ist.

3. Fahrzeugkomponente nach Anspruch 1 oder Anspruch 2, **dadurch gekennzeichnet, dass** das geformte Verkleidungselement ein Automobilfußraum-Verkleidungselement (14) ist.

4. Fahrzeugkomponente nach einem der Ansprüche 1 bis 3, **dadurch gekennzeichnet, dass** das geformte Verkleidungselement eine Schale für einen Fahrgastsitz ist.

5. Fahrzeugkomponente nach Anspruch 4, **dadurch gekennzeichnet, dass** die Schale eine Kopfstütze umfasst, und dass die akustischen Abstrahler in der Kopfstütze angeordnet sind.

6. Fahrzeugkomponente nach einem der Ansprüche 1 bis 5, **dadurch gekennzeichnet, dass** das geformte Verkleidungselement eine Dachhimmelverkleidung (1) ist.

7. Fahrzeugkomponente nach einem der Ansprüche 1 bis 6, **dadurch gekennzeichnet, dass** das geformte Verkleidungselement (1, 14) einen Hauptkörper (2) aus einem von einer elastischen Schaumschicht (3) und einem dekorativen Überzug (4) bedeckten, harzgetränkten Fasermaterial umfasst, wobei der Hohlraum (9) in der Dicke des Körpers (2) ausgebildet ist und die Dicke der elastischen Schaumschicht (3) verringert ist, wodurch die Schaumschicht akustisch durchlässig ist.

8. Fahrzeug (15) mit einem Fahrgastraum, der eine Fahrzeugkomponente nach einem der Ansprüche 1 bis 7 umfasst.

9. Fahrzeug nach Anspruch 8, **gekennzeichnet durch** eine Fahrgastraumtür mit einer Türverkleidung, wobei ein Mittel/Hochfrequenz- und/oder ein Niedrigfrequenzabstrahler an der Türverkleidung befestigt oder integral mit ihr ausgebildet ist.

10. Fahrzeug nach Anspruch 8 oder Anspruch 9, **dadurch gekennzeichnet, dass** die Mittel/Hochfrequenzabstrahler (5) oberhalb einzelner Fahrgastsitze in dem Fahrzeug angeordnet sind.

11. Fahrzeug nach einem der Ansprüche 8 bis 10, **dadurch gekennzeichnet, dass** der oder jeder Schwingungserreger (5, 10) elektrodynamisch ist.

## Revendications

1. Un composant de véhicule sous la forme d'un élément de garniture moulé (1, 14) pour un compartiment de passagers, l'élément de garniture (1, 14) comprenant un premier haut-parleur sous forme de panneau consistant en un radiateur acoustique (5), avec un panneau (10) capable d'entretenir et de propager de l'énergie vibratoire d'entrée, par des ondes de flexion, dans au moins une zone active s'étendant transversalement à l'épaisseur, de façon à avoir des composantes de vibration de mode résonnant réparties sur l'au moins une zone, et ayant des emplacements ou des sites préférentiels prédéterminés à l'intérieur de cette zone pour des excitateurs de vibration (12), et un ou plusieurs excitateurs de vibration (12) directement fixés sur le panneau (10) à l'un au moins des emplacements ou des sites, pour faire vibrer le radiateur acoustique,
**caractérisé en ce que** l'élément de garniture moulé (1, 14) comporte une cavité (9) dans laquelle le premier radiateur acoustique (5) est monté de façon élastique pour agir comme un radiateur de fréquences moyennes/élevées, et **en ce que** un ou plusieurs excitateurs de vibration (6) sont directement montés sur l'élément de garniture moulé (1, 14) pour faire résonner l'élément de garniture moulé (1, 14) à des fréquences basses, en formant un radiateur de fréquences basses produisant une émission acoustique dans la gamme des basses lorsqu'il résonne.

2. Un composant de véhicule selon la revendication 1, **caractérisé en ce que** l'élément de garniture moulé est un pare-soleil.

3. Un composant de véhicule selon la revendication 1 ou la revendication 2, **caractérisé en ce que** l'élément de garniture moulé est un élément de garniture d'espace pour les jambes (14) dans une automobile.

4. Un composant de véhicule selon l'une quelconque des revendications 1 à 3, **caractérisé en ce que** l'élément de garniture moulé est une coque pour un siège de passager.

5. Un composant de véhicule selon la revendication 4, **caractérisé en ce que** la coque comprend un appui-tête et **en ce que** les radiateurs acoustiques sont placés dans l'appui-tête.

6. Un composant de véhicule selon l'une quelconque des revendications 1 à 5, **caractérisé en ce que** l'élément de garniture moulé est une garniture de plafond (1).

7. Un composant de véhicule selon l'une quelconque des revendications 1 à 6, **caractérisé en ce que** l'élément de garniture moulé (1, 14) comprend un corps principal (2) en résine imprégnée d'une matière fibreuse, recouvert d'une couche de mousse élastique (3) et d'un parement décoratif (4), la cavité (9) étant formée dans l'épaisseur du corps (2) et l'épaisseur de la couche de mousse élastique (3) étant réduite, grâce à quoi la couche de mousse est transparente au point de vue acoustique.

8. Un véhicule (15) ayant un compartiment de passagers comprenant un composant de véhicule selon l'une quelconque des revendications 1 à 7.

9. Un véhicule selon la revendication 8, **caractérisé par** une porte de compartiment de passagers ayant une garniture de porte, et en ce qu'un radiateur de fréquences moyennes/élevées et/ou de fréquences basses est fixé sur la garniture de porte ou est intégré à cette dernière.

10. Un véhicule selon la revendication 8 ou la revendication 9, **caractérisé en ce que** les radiateurs de fréquences moyennes/élevées (5) sont positionnés au-dessus de sièges de passagers individuels dans le véhicule.

11. Un véhicule selon l'une quelconque des revendications 8 à 10, **caractérisé en ce que** l'excitateur de vibration (5, 10), ou chacun d'eux, est électrodynamique.
